# EUROPEAN PATENT APPLICATION

(11) **EP 4 835 546 A1**
(43) Date of publication of application: **04.11.2026**
(21) Application number: 24911042.0
(22) Date of filing: 23.12.2024
(51) Int. Cl.: G02C 5/02, G02C 5/14

(54) **SMART GLASSES**

(30) Priority: 29.12.2023 CN 202311865772
(71) Applicant: Beijing Unicorn Technology Co., Ltd., Beijing 100098 (CN)
(72) Inventor: WANG, Jun, Beijing 100098 (CN); LIU, Yang, Beijing 100098 (CN)
(74) Representative: Grünecker Patent- und Rechtsanwälte PartG mbB
(86) International application number: PCT/CN2024/141496
(87) International publication number: WO 2025/140114

(57) **Abstract**

The embodiments of the present disclosure disclose smart glasses. A specific implementation is as follows. The smart glasses include a frame and temples, wherein the frame includes a front frame and a crossbeam, the front frame being connected to the crossbeam, and deformation gaps being formed between the crossbeam and the front frame. The temples are rotatably connected to the crossbeam, causing the crossbeam to deform and move closer to the front frame.

## Description

The present disclosure claims priority to Chinese Patent Application No. CN202311865772.7, filed with the China National Intellectual Property Administration on December 29, 2023, and entitled "Smart Glasses", which is incorporated herein by reference in its entirety.

### TECHNICAL FIELD

The present disclosure relates to the technical field of wearable devices, and in particular to smart glasses.

### BACKGROUND

In the related art, a frame of smart glasses typically includes a front frame, a bracket, and a rear shell. The bracket is fixed between the front frame and the rear shell. The front frame is connected to the rear shell. Temples are connected to the rear shell. Cameras are usually fixed on the bracket and protrude from the front frame. Under the action of an external force, when the temples splay outward, deformation is transmitted along a path from the rear shell through the front frame and the bracket to the cameras, such that the positional and angular accuracy of the cameras is affected. Transmission of an amount of deformation may be reduced by designing a fixing manner between the rear shell and the front frame, between the rear shell and the bracket, or between the front frame and the bracket.

### SUMMARY

The embodiments of the present disclosure provide smart glasses.

The smart glasses include a frame and temples, wherein the frame includes a front frame and a crossbeam, the front frame being connected to the crossbeam, and deformation gaps being formed between the crossbeam and the front frame; and the temples are rotatably connected to the crossbeam, causing the crossbeam to deform and move closer to the front frame.

The technical solution of the present disclosure is further described in detail below in conjunction with the accompanying drawings and embodiments.

### BRIEF DESCRIPTION OF THE DRAWINGS

The drawings constituting a part of the specification describe embodiments of the present disclosure, and together with the description, serve to explain the principle of the present disclosure.

With reference to the accompanying drawings, the present disclosure can be understood more clearly according to the following detailed description, in which:
Fig. 1 shows a partial structural exploded view of glasses according to embodiments of the present disclosure;
Fig. 2 shows a view of cooperation between a crossbeam and an optical imaging system of glasses according to embodiments of the present disclosure;
Fig. 3 shows a structural view of cooperation among a temple, a connecting mechanism, and a crossbeam of glasses according to embodiments of the present disclosure;
Fig. 4 shows a schematic structural view of cooperation among a front frame, a crossbeam, a connecting mechanism, and an optical imaging system of glasses according to embodiments of the present disclosure;
Fig. 5 shows a schematic partial structural view of a connecting mechanism of glasses connecting a frame to a temple, according to embodiments of the present disclosure;
Fig. 6 shows a partial structural exploded view of glasses according to embodiments of the present disclosure;
Fig. 7 shows a schematic structural view of a connecting mechanism with a torsion spring in glasses according to embodiments of the present disclosure;
Fig. 8 shows a schematic structural view of a connecting mechanism with an elastic piece in glasses according to embodiments of the present disclosure;
Fig. 9 shows a schematic structural view of an elastic piece of a connecting mechanism of glasses according to embodiments of the present disclosure;
Fig. 10 shows a schematic structural view of a support of a connecting mechanism of glasses according to embodiments of the present disclosure;
Fig. 11 shows a view of a connecting mechanism of glasses from a first viewing angle according to embodiments of the present disclosure;
Fig. 12 shows a view of a connecting mechanism of glasses from a second viewing angle according to embodiments of the present disclosure;
Fig. 13 shows a view of a connecting mechanism of glasses from a third viewing angle according to embodiments of the present disclosure;
Fig. 14 shows a structural exploded view of connection between a temple and a connecting mechanism of glasses according to embodiments of the present disclosure; and
Fig. 15 shows a partial structural view of a temple of glasses according to embodiments of the present disclosure.

Reference signs: 100. Glasses; 1. Connecting mechanism; 11. Support; 111. First extension portion; 1111. Second toothed portion; 112. Second rotational connecting portion; 1121. Fastener; 1122. Second connecting hole; 1123. Friction plate; 1124. Disc spring; 113. First rotational connecting portion; 1131. Connecting post; 1131a. Post hole; 1132. Connecting shaft; 114. Second extension portion; 1141. Wide segment; 1142. Narrow segment; 12. Connecting bracket; 121. Limiting portion; 121a. Limiting member; 122. Connecting arm; 1221. First connecting hole; 123. Second connecting plate; 1231. Second fixing hole; 1232. Protruding portion; 13. Elastic component; 2. Temple; 21. First toothed portion; 22. Rotating post; 3. Frame; 31. Front frame; 311. Camera hole; 32. Crossbeam; 320. Assembling portion; 321. First connecting plate; 3211. Notch portion; 3212. First fixing hole; 322. Stop plate; 34. Middle connecting member; 351. Side connecting member; 352. Deformable element; 5. Optical imaging system; 6. Sensor; a. Screw.

It is to be noted that these drawings and text descriptions are not intended to limit the scope of conception of the present invention in any way, but to explain the concepts of the present invention for those skilled in the art by referring to specific embodiments.

### DETAILED DESCRIPTION

To make the objects, technical solutions and advantages of embodiments of the present invention clearer, the technical solutions in the embodiments will be described clearly and completely with reference to the drawings in the embodiments of the present invention. The following embodiments are used for illustrating the present invention, but not limiting the scope of the present invention.

In description of the present invention, it should be noted that orientation or location relations denoted by the terms "upper", "lower", "inner", "outer", etc. are orientation or location relations based on illustration in the drawings, and are only intended to facilitate describing the present invention and simplify description, instead of indicating or implying the denoted apparatuses must have specific orientations and are constructed and operated in specific orientations, and thus they should not be construed as limiting the present invention.

In description of the present invention, it should be noted that unless otherwise explicitly specified and defined, the terms "mount" and "connect" should be construed broadly. For example, such a term may denote fixed connection, or detachable connection, or integrated connection; mechanical connection, or electric connection; direct connection, or connection via an intermediate medium. For those of ordinary skill in the art, specific meanings of the above-mentioned terms in the present invention may be construed according to specific conditions.

Some embodiments of the present disclosure provide glasses including a frame and a temple. The temple is connected to the frame and are rotatable relative to the frame. Optionally, the temple is capable of splaying outward relative to the frame, so that the glasses can adapt to wearers with different head circumferences.

In some optional embodiments, the glasses are smart glasses, which are further provided with a sensor 6. Optionally, the sensor 6 includes a sensor 6 capable of capturing at least one of position or attitude. For example, the sensor may be a camera or an inertial measurement unit (IMU), etc. The camera may collect images required for SLAM (simultaneous localization and mapping) to provide vision-based tracking and positioning, which may be used for positioning of the smart glasses and recognition of interactive gestures. The inertial measurement unit may be used to provide motion data. Optionally, the sensor 6 may be provided on the frame.

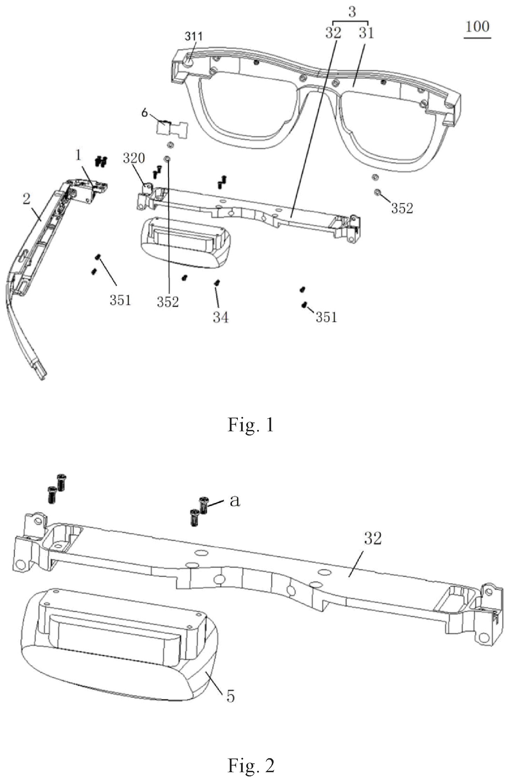

Fig. 1 shows a partial structural exploded view of glasses according to some embodiments of the present disclosure. As shown in Fig. 1, the glasses 100 include a frame 3 and temples 2. The temples 2 are connected to two sides of the frame 3. The frame 3 includes a front frame 31 and a crossbeam 32. The crossbeam 32 is connected to the front frame 31, and deformation gaps are formed between the crossbeam 32 and the front frame 31. The front frame 31 is an exterior component of the glasses 100 and can support goggles. The front frame 31 is typically a plastic part and is prone to deformation. The temples 2 are rotatably connected to the crossbeam 32. When the temples 2 splay outward, the crossbeam 32 is caused to deform slightly, such that the crossbeam 32 moves closer to the front frame 31.

If the front frame 31 is fixedly connected over an entire length thereof to the crossbeam 32, when the crossbeam 32 deforms, the front frame 31 is also caused to deform synchronously, affecting the appearance of the glasses 100 and easily causing the front frame 31 to crack. By forming the deformation gaps between the crossbeam 32 and the front frame 31, and connecting the temple 2 only to the crossbeam 32 and not to the front frame 31, when the crossbeam 32 deforms, the front frame 31 does not deform therewith, thereby reducing the impact of the deformation of the crossbeam 32 on the front frame 31.

In some optional embodiments, the smart glasses include a frame 3 and temples 2. The frame 3 includes a front frame 31 and a crossbeam 32 connected to the front frame 31. The temples 2 are rotatably connected to the crossbeam 32. As rotation angles of the temples 2 increase, the crossbeam 32 deforms, and two ends of the crossbeam 32 gradually move closer to the front frame 31, and distances between the ends of the front frame 31 and adjacent surfaces of the crossbeam 32 gradually decrease. A minimum distance between the ends of the front frame 31 and the adjacent surfaces of the crossbeam 32 is greater than 0. Therefore, forces applied to the ends of the front frame 31 by the crossbeam 32 are much smaller than forces applied to the crossbeam 32 by the temples 2. For example, the forces applied to the ends of the front frame 31 by the crossbeam 32 may be 0 all the time.

In some optional embodiments, the smart glasses include a frame 3 and temples 2. The frame 3 includes a front frame 31 and a crossbeam 32 connected to the front frame 31. The temples 2 are rotatably connected to the crossbeam 32. When the temples 2 rotate, deformation amounts of the ends of the front frame 31 are much smaller than deformation amounts of ends of the crossbeam 32. Moreover, the deformation amounts of the ends of the front frame 31 are less than a preset deformation amount threshold. For example, the deformation amounts of the ends of the front frame 31 may be 0.

Optionally, the frame 3 of the glasses 100 further includes a rear frame. The front frame 31 is connected to the rear frame, and an accommodating space is formed therebetween, with the crossbeam 32 disposed within the accommodating space. It may be understood that the terms "front frame" and "rear frame" do not imply positional limitations of the two components, but are merely used for distinction. Those of ordinary skill in the art can, based on the working principle, arrange the components and their positions capable of implementing the embodiments of the present disclosure.

In some optional embodiments, the glasses 100 are smart glasses, and include sensors 6. The sensors 6 include sensors capable of capturing at least one of position or attitude. For example, the sensors may be cameras or inertial measurement units. The sensors 6 may be arranged at positions on the front frames 31 near the deformation gaps. When the crossbeam 32 deforms, deformation at positions on the front frame 31 where the sensors 6 are provided is substantially not caused, thereby ensuring that the positions and attitudes of the sensors 6 do not change and data collected by the sensors 6 is not affected.

In some possible implementations, the sensors 6 may include cameras, which are arranged at both ends of the front frame 31. Deformation gaps may be formed between two ends of the crossbeam 32 and the front frame 31, such that when the two ends of the crossbeam 32 deform, impacts on the two ends of the front frame 31 are relatively small. The sensors 6 may be arranged at both ends of the front frame 31. When the temples 2 splay outward, the deformation amounts of the two ends of the crossbeam 32 are relatively large. Since the crossbeam 32 is not in direct contact with the two ends of the front frame 31, when the ends of the crossbeam 32 deform, contact interference with the two ends of the front frame 31 does not occur, therefore, the front frame 31 does not deform, and thus, the positional and attitude accuracy of the cameras is not affected.

In some possible implementations, the front frame may be provided with camera holes 311. The cameras 6 are located on an inner side of the front frame, and the cameras 6 cover the camera holes 311. The front frame may serve to protect the cameras 6. The front frame and the cameras 6 may be connected and fixed to each other by means of any of a bonding structure, a snap-fit structure, and a fastener connecting structure.

In some possible implementations, a middle portion of the front frame 31 is fixedly connected to the crossbeam 32, and the sensors 6 are arranged at the ends of the front frame 31; and the smart glasses 100 further include a cable, which is connected to the sensors 6, and the cable extends along an inner wall of the front frame 31 from the ends of the front frame 31 toward the middle portion of the front frame 31, and extends to the crossbeam 32.

Cable segments located between the ends of the front frame 31 and the middle portion of the front frame 31 extend along the inner wall of the front frame 31, and the cable may be connected to the inner wall of the front frame 31 and to the middle portion of the crossbeam 32, thereby preventing the cable from moving and affecting the cameras 6 when the crossbeam 32 deforms.

In some possible implementations, the frame 3 includes deformable elements 352. The deformable elements 352 are located within the deformation gaps, and the deformable elements 352 are in limiting engagement with at least one of the front frame 31 and the crossbeam 32.

The deformable elements 352 may be elastic elements, which when subjected to an external force, can buffer the external force, and can recover from deformation after the external force is removed. The elastic elements may, for example, be springs. The deformable elements 352 may also be flexible elements, which deform when subjected to an external force and recover from the deformation after the external force is removed. The flexible elements may, for example, be flexible washers or foam, which can mitigate the impact of deformation of the crossbeam 32 on the front frame 31. By disposing the deformable elements 352 within the deformation gaps, the impact of deformation of the crossbeam 32 on the front frame 31 can be mitigated, thereby reducing deformation of the front frame 31, maintaining an accurate angle of the sensors 6 and improving user experience.

It should be noted that the deformable elements 352 described above may be in limiting engagement with the crossbeam 32 only. Alternatively, the deformable elements 352 described above may be in limiting engagement with the front frame 31 only. Alternatively, the deformable elements 352 described above may be in limiting engagement with both the crossbeam 32 and the front frame 31. Regarding "limiting", it may be understood as the deformable elements 352 elastically abutting against at least one of the crossbeam 32 and the front frame 31 to achieve positional limitation through elastic abutting. Alternatively, it may be understood as providing specific limiting engagement structures in the crossbeam 32 and the front frame 31. The deformable elements 352 may be connected to the limiting engagement structures. Limiting engagement portions limit the deformable elements 352 to prevent dislodgement of the deformable elements 352. The limiting engagement structures may be any of protrusions (e.g., limiting posts) and grooves. Of course, the limiting engagement structures may also be other structures, which are not uniquely limited in the present disclosure.

In some possible implementations, the frame 3 includes deformable elements 352 and side connecting members 351. The side connecting members 351 are disposed at ends of the crossbeam 32 in the length direction thereof, and the side connecting members 351 connect the crossbeam 32 to the front frame 31. The deformable elements 352 are disposed on the side connecting members 351.

Exemplarily, the side connecting members 351 are at least partially located between the crossbeam 32 and the front frame 31, and the side connecting members 351 may be fixedly connected to the crossbeam 32 and to the front frame 31 by means of bonding, snap-fit or fastener connection.

Exemplarily, the side connecting members 351 may be made of a rigid material. For example, the side connecting members 351 may be rigid connectors, and the deformable elements 352 may be disposed within the gaps formed between the crossbeam 32 and the front frame 31 and disposed on the rigid connectors. Optionally, the rigid connectors may pass through the deformable elements 352 so that the deformable elements are located within the gaps formed between the crossbeam 32 and the front frame 31. Optionally, the deformable elements 352 may, for example, be flexible washers or foam. The rigid connectors may, for example, be screws.

Exemplarily, at least two deformable elements 352 are provided at each end of the front frame 31. The deformable elements 352 at each end of the front frame 31 are arranged sequentially in a height direction of the front frame. Each deformable element 352 has a central hole. Each rigid connector passes sequentially through the crossbeam 32 and a central hole of a corresponding deformable element 352 and is connected to the front frame.

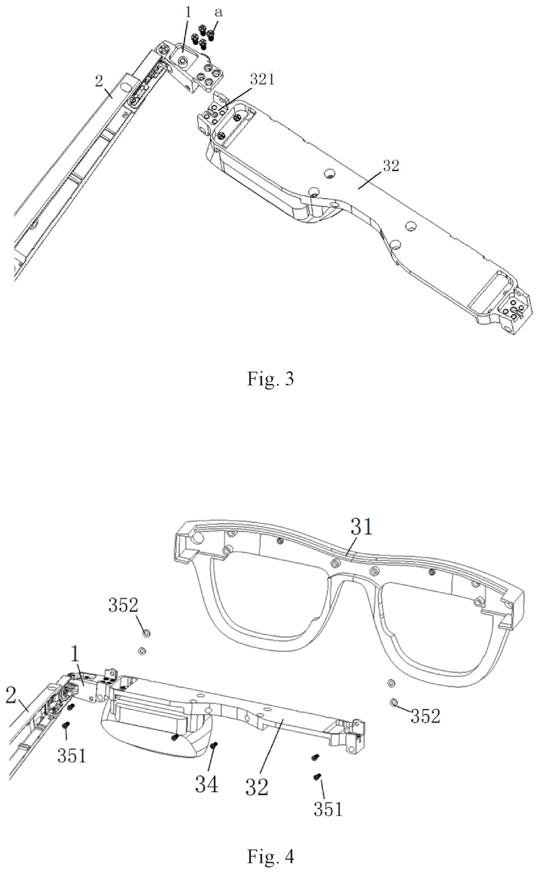

In some possible implementations, as shown in Figs. 1 and 4, the frame 3 includes a middle connecting member 34. The middle connecting member 34 is disposed at a middle portion of the crossbeam 32 in the length direction thereof, and the middle connecting member 34 connects the crossbeam 32 to the front frame 31.

Optionally, the middle connecting member 34 may be made of a rigid material. The middle portion of the crossbeam 32 is the farthest from the temples 2 at both ends, so the rotation of the temples 2 has a slight impact on the middle portion of the crossbeam 32. Therefore, the middle portion of the crossbeam 32 may be connected and fixed to the front frame 31 by means of the middle connecting member 34 made of a rigid material. By rigidly connecting the middle portion of the front frame 31 to the crossbeam 32, obvious relative wobbling between the front frame 31 and the crossbeam 32 can be avoided, resulting in good integration between the front frame 31 and the crossbeam 32. The middle connecting member 34 made of a rigid material may be a screw.

Optionally, the middle connecting member 34 may also be formed of a deformable material. Although the temples 2 are connected to the ends of the crossbeam 32, when both temples 2 are folded inward simultaneously, some deformation inevitably occurs in the middle portion of the crossbeam 32, such that the crossbeam 32 causes the front frame 31 to deform to some degree. The middle connecting member 34 is at least partially located between the front frame 31 and the crossbeam 32, and can buffer and absorb deformation of the crossbeam 32 and reduce the impact of the deformation of the crossbeam 32 on the front frame 31. The middle connecting member 34 may be fixedly connected to the crossbeam 32 and to the front frame 31 by means of bonding, snap-fit or fastener connection.

Optionally, the middle connecting member 34 may also be formed of a combination of a rigid material and a deformable material. Exemplarily, the middle connecting member 34 may include a deformable element and a rigid connector. The deformable element may be arranged between the crossbeam and the front frame and disposed on the rigid connector. For example, the rigid connector may pass through the deformable element, the crossbeam, and the front frame to connect and fix the three components. The deformable element may be a flexible washer or foam. The rigid connector may be a screw.

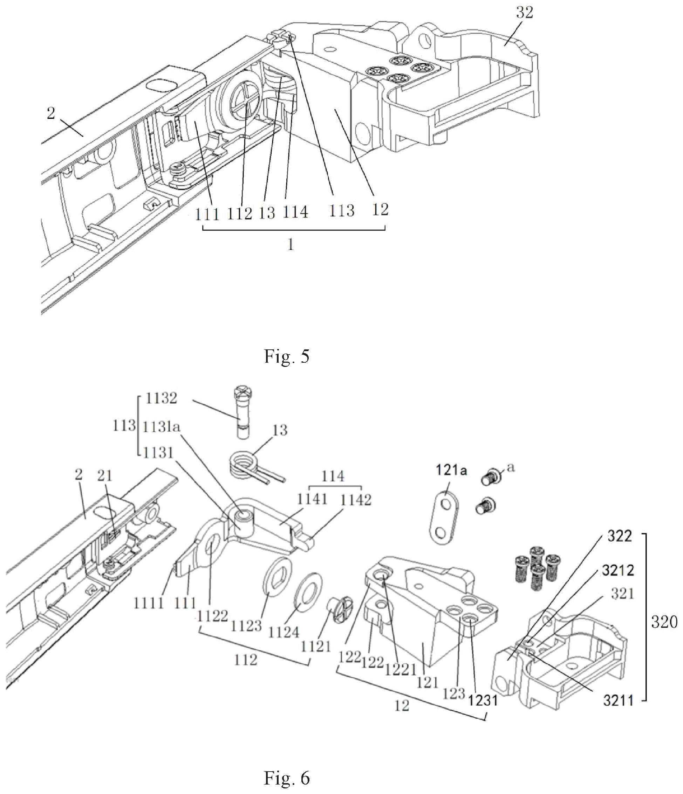

Fig. 5 shows a schematic view of a connecting mechanism 1 of glasses 100 connecting a frame 3 to a temple 2, according to some embodiments of the present disclosure. Fig. 6 shows a partial structural exploded view of glasses 100 according to some embodiments of the present disclosure. As shown in Figs.5 and 6, the glasses 100 include the frame 3, temples 2, and connecting mechanisms 1. Each temple 2 is connected to the frame 3 by means of a connecting mechanism 1. The connecting mechanism 1 enables relative rotation between the temple 2 and the frame 3, so as to adjust an angle of the temple 2 relative to the frame 3.

In some optional embodiments, as shown in Figs. 5 and 6, the connecting mechanism 1 includes a support 11 and a connecting bracket 12. The support 11 is connected to the temple 2. The connecting bracket 12 is connected to an end of the crossbeam 32 in a length direction of the crossbeam 32. The support 11 is rotationally connected to the connecting bracket 12, to enable the temple 2 to rotate about a first axial direction relative to the frame 3. The first axial direction may be a rotational axial direction about which the temple 2 splays outward relative to the frame 3. During the rotation of the temple 2 about the first axial direction, the temple 2 is splayed.

In embodiments of the present disclosure, the support 11 is configured to connect to the temple 2, and the connecting bracket 12 is configured to connect to the frame 3, thereby achieving connection between the temple and the frame 3. When the support 11 and the connecting bracket 12 rotate relative to each other, the temple 2 rotates relative to the frame 3, enabling angular adjustment between the temple 2 and the frame 3, so that the glasses 100 can adapt to wearers with different head circumferences. In some possible implementations, a sensor 6 is at a position opposite to the connecting bracket 12 in a thickness direction of the frame 3, and a deformation gap is formed between the sensor 6 and the connecting bracket 12.

It may be understood that the thickness direction of the frame 3 refers to a direction perpendicular to the plane of the front frame 31.

Optionally, the connecting bracket 12 may be fixedly connected to the end of the crossbeam 32 by means of a fastener. A deformation gap is formed between a sensor 6 arranged on the front frame 31 and the connecting bracket 12. In a process in which the temple 2 splays, the connecting bracket 12 moves toward the front frame 31 but does not come into contact with the sensor 6.

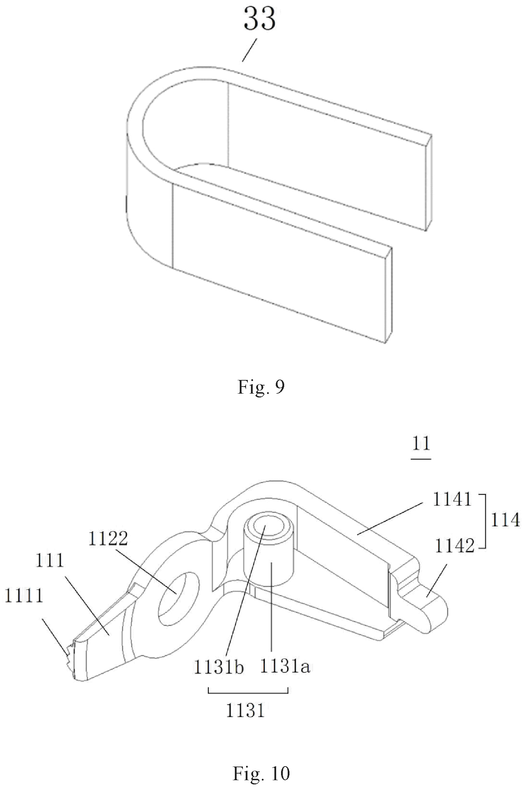

In some possible implementations, as shown in Figs. 6 and 10, the support 11 includes a first extension portion 111 and a second extension portion 114. The first extension portion 111 and the second extension portion 114 are connected to each other. Optionally, the first extension portion 111 and the second extension portion 114 may extend in different directions; that is, an included angle may be formed between the first extension portion 111 and the second extension portion 114. Alternatively, the first extension portion 111 and the second extension portion 114 may extend along a curve; for example, the first extension portion 111 and the second extension portion 114 extend along an arc.

In some embodiments of the present disclosure, as shown in Fig. 6, the connecting bracket 12 includes oppositely arranged limiting portions 121. The oppositely arranged limiting portions 121 can accommodate the second extension portion 114, and can provide space for movement of the second extension portion 114. Optionally, two limiting portions 121 arranged spaced apart and opposite each other may be provided.

Optionally, the support 11 is rotatably connected to the connecting bracket 12, such that the second extension portion 114 of the support 11 is located between the oppositely arranged limiting portions 121, and the second extension portion 114 is rotatable about a first axial direction, such that limit positions of relative rotation of glasses structure portion 114, i.e., define a relative rotation range of the second extension portion 114. Thus, a relative rotation range of the temple and the frame can be limited.

In some embodiments of the present disclosure, the first axial direction may be a rotational axial direction about which the temple 2 splays outward relative to the frame 3. When the second extension portion 114 of the connecting bracket 12 is limited by a limiting portion 121 on one side, a first angle is formed between the temple 2 and the frame 3. When the second extension portion 114 is limited by a limiting portion 121 on the other side, a second angle is formed between the temple 2 and the frame 3. This enables the temple 2 and the frame 3 to rotate between the first angle and the second angle.

In some possible implementations, an extension direction of the first extension portion 111 is substantially parallel to a length direction of the temple 2, and the second extension portion 114 is substantially parallel to the length direction of the crossbeam 32 when abutting against one of the limiting portions 121. The above-described first extension portion 111 and second extension portion 114 are substantially perpendicular to each other, or an obtuse angle slightly greater than 90 degrees may be formed between the first extension portion 111 and the second extension portion 114. The angle between the above-described first extension portion 111 and second extension portion 114 may be adapted to a required angle between the frame 3 and the temple 2 when the temple 2 is in a splayed state. In a process in which the temple 2 causes the first extension portion to rotate, the second extension portion 114 swings in the thickness direction of the frame 3. The two limiting portions 121 define a swing range of the second extension portion 114.

In some possible implementations, when the second extension portion 114 abuts against one of the limiting portions 121, the crossbeam 32 is caused to deform. The two limiting portions 121 are sequentially arranged in the thickness direction of the frame 3. One is closer to a wearer, and the other is farther from the wearer. In a process of splaying the temple 2, the second extension portion 114 abuts against the limiting portion 121 on the side close to the wearer, causing the crossbeam 32 to deform toward the side of the wearer's face. When the temple 2 is folded to a limit position, the second extension portion 114 abuts against the limiting portion 121 on the side away from the wearer, causing the crossbeam 32 to deform toward a front side of the wearer.

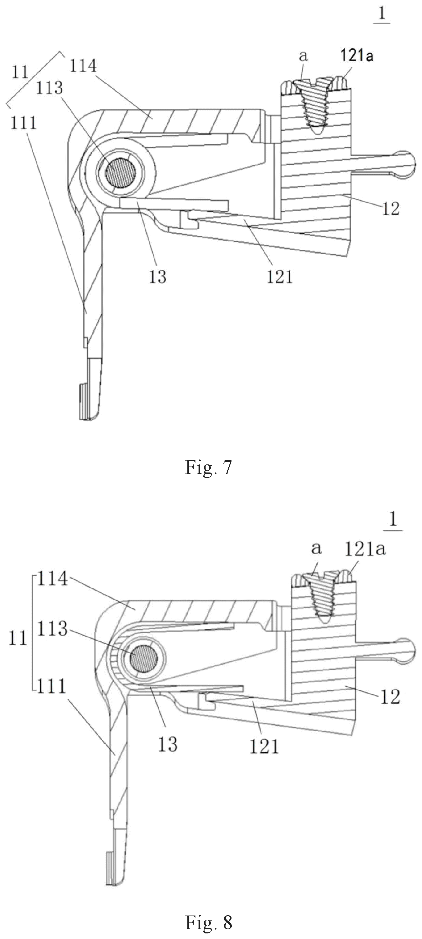

In some possible implementations, as shown in Figs. 6 and 7, in some embodiments of the present disclosure, an elastic component 13 may be further provided in the connecting mechanism 1. An elastic force of the elastic component 13 may serve as a restoring force for the movement of the support 11 relative to the connecting bracket 12, that is, as a damping force for the relative movement between the temple and the frame.

Optionally, the elastic component 13 is configured to provide a damping force for the outward splaying of the temple 2 relative to the frame 3. When the glasses are worn on a user's head, the two temples of the glasses splay outward. The damping force provided by the elastic component 13 enables the two temples 2 to clamp a user's head, thereby enabling the temples 2 to relieve pressure on nose pads and enabling the glasses to be securely worn on the wearer's head.

In some embodiments of the present disclosure, as shown in Fig. 6, the elastic component 13 is located between the support 11 and the connecting bracket 12 to provide a restoring force for the first extension portion 111 to rotate toward the connecting bracket 12. Under the action of an external force, during a process in which the temple 2 splays relative to the frame 3, the elastic component 13 located between the support 11 and the connection 12 is deformed under force. After the external force is removed, the elastic component 13 recovers from the deformation, causing the temple 2 to pivot inward toward the frame 3. The elastic component 13 is configured to provide a damping force for the outward splaying of the temple 2 relative to the frame 3, such that the temple 2 can relieve pressure on nose pads of the glasses and the glasses 100 worn on a human body do not easily fall off, thereby improving wearing comfort.

In some embodiments of the present disclosure, the damping force provided by the elastic component 13 is related to a change in a rotation angle of the temple 2. Optionally, the damping force provided by the elastic component 13 may also be related to a change amount of the length of the elastic component 13. When the temple 2 rotates, the length of the elastic component 13 changes, thereby providing a restoring force for the temple 2 to rotate in an opposite direction. Optionally, the elastic component 13 has a variable splaying angle, and the damping force provided by the elastic component 13 may also be related to a change amount of the splaying angle of the elastic component 13. When the temple 2 rotates, the splaying angle of the elastic component 13 changes, thereby providing a restoring force for the temple 2 to rotate in an opposite direction. Compared with the elastic component with a variable length, the elastic component with a variable splaying angle can provide a greater damping force, thereby providing a greater clamping force for the temple 2 of the glasses 100.

In some embodiments of the present disclosure, the elastic component 13 is located between the second extension portion 114 and any of the limiting portions 121 of the connecting bracket 12, such that when the first extension portion 111 rotates away from the connecting bracket 12, the second extension portion 114 acts on the elastic component, causing the elastic component 13 to deform. For example, the second extension portion 114 can compress or stretch the elastic component 13, causing the elastic component 13 to deform or increasing a deformation amount of the elastic component 13. Thus, a restoring force for the first extension portion 111 to rotate toward the connecting bracket 12 is provided by means of the elastic component 13.

Exemplarily, the two limiting portions 121 of the connecting bracket 12 are sequentially arranged in the thickness direction of the frame 3 of the glasses 100. The two limiting portions 121 are respectively two limiting portions 121 arranged on inner and outer sides. Optionally, when the temple 2 is splayed outward, the second extension portion 114 may be used to compress the elastic component 13, so that the elastic component 13 provides an opposite restoring force. This can be achieved by disposing the elastic component 13 between the second extension portion 114 and the inner-side limiting portion 121. Alternatively, when the temple 2 is splayed outward, the second extension portion 114 may be used to stretch the elastic component 13, so that the elastic component 13 provides an opposite restoring force. This can be achieved by disposing the elastic component 13 between the second extension portion 114 and the outer-side limiting portion 121.

It may be understood that the "inner-side limiting portion" mentioned above may be understood as a limiting portion closer to the face when the glasses are being worn. The "outer-side limiting portion" may be understood as a limiting portion farther from the face when the glasses are being worn.

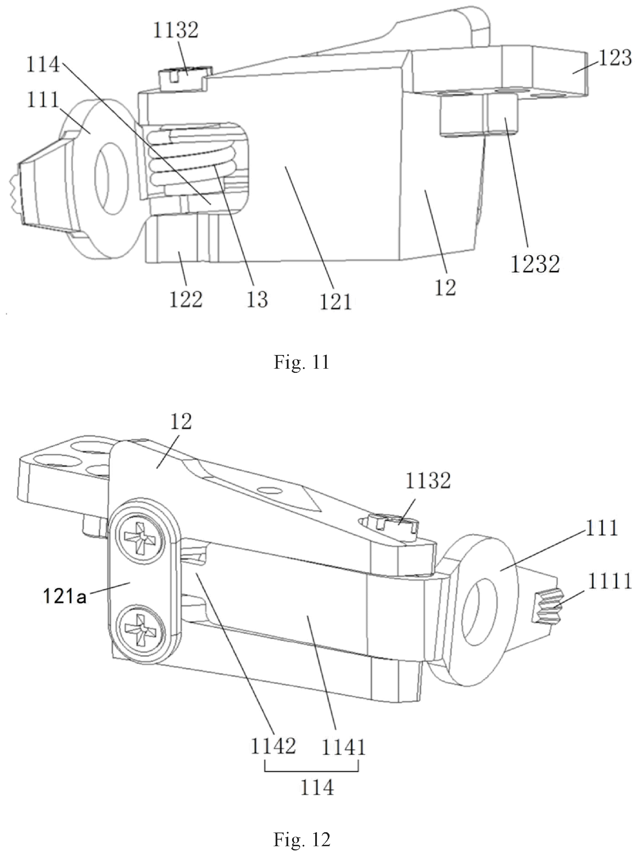

Figs. 11 to 13 show views of a connecting mechanism from three different viewing angles. The connecting bracket 12 may include two connecting arms 122. The two connecting arms 122 and the limiting portions 121 define an accommodating space. The second extension portion 114 is accommodated within the accommodating space.

In an optional implementation, each connecting arm 122 is connected to the two limiting portions 121. Optionally, the planes of the connecting arms 122 are substantially perpendicular to the limiting portions 121. The two connecting arms 122 may be used to limit the position of the second extension portion 114. A distance between the two connecting arms 122 is slightly greater than the width of the second extension portion 114, thereby cooperating with the two limiting portions 121 to ensure that the second extension portion 114 can swing only within the accommodating space.

In some embodiments of the present disclosure, the support 11 further includes a first rotational connecting portion 113. The first rotational connecting portion 113 is connected to at least one of the two connecting arms 122. The connecting arm 122 further provides a physical structure for mounting the first rotational connecting portion 113, facilitating the connection between the connecting bracket 12 and the support 11.

In some optional embodiments, as shown in Figs. 6 and 10, the first rotational connecting portion 113 may include a connecting shaft 1132. The connecting shaft 1132 is configured to connect the support 11 to the connecting bracket 12 so that the temple can rotate relative to the frame about the connecting shaft 1132. An axial direction of the connecting shaft 1132 is the first axial direction. Optionally, the connecting shaft 1132 and the support 11 may be detachable separate components; or the connecting shaft 1132 and the support 11 may be integrally formed.

In some optional embodiments, as shown in Figs. 6 and 7, the first rotational connecting portion 113 may include a connecting post 1131. The connecting post 1131 is disposed at an included angle between the first extension portion 111 and the second extension portion 114. The connecting post 1131 has a post hole 1131a. The connecting shaft 1132 may be fixed or rotatably connected to the post hole 1131a. The connecting arms 122 of the connecting bracket 12 may be provided with first connecting holes 1221. The connecting shaft 1132 is inserted into the post hole 1131a and the first connecting holes 1221. Thus, the connecting bracket 12 can be rotatably connected to the connecting shaft 1132.

Optionally, the connecting shaft 1132 may include a columnar body and a cap disposed at one end of the columnar body. An end of the columnar body away from the cap passes sequentially through a first connecting hole 1221 in an upper-side connecting arm 122 and the post hole 1131a in the connecting post 1131, and is then connected to a first connecting hole 1221 in a lower-side connecting arm 122. At least one of the first connecting holes 1221 and the post hole 1131a may be provided with internal threads. The connecting shaft 1132 may be provided with external threads. The post body may be threadedly connected to at least one of the first connecting holes 1221 and the post hole 1131a. The cap is limited by the upper-side connecting arm 122. By disposing the connecting post 1131 at the included angle between the first extension portion 111 and the second extension portion 114, less space between the first extension portion 111 and the second extension portion 114 is occupied, without affecting the connection between the first extension portion 111 and the temple, nor the engagement between the second extension portion 114 and the connecting bracket 12.

In some embodiments of the present disclosure, the support 11 may include a mounting plate connected to the first extension portion 111 and the second extension portion 114. The mounting plate extends from the first extension portion 111 toward the second extension portion 114. The connecting post 1131 may be disposed on the mounting plate. The post hole 1131a runs through both the connecting post 1131 and the mounting plate, allowing the connecting shaft 1132 of the first rotational connecting portion 113 to pass through the connecting post 1131 and the mounting plate. Optionally, the plane of the mounting plate is substantially perpendicular to at least one of the plane of the first extension portion 111 and the plane of the second extension portion 114, and the mounting plate is connected to ends of the first extension portion 111 and the second extension portion 114 on the same side.

In some embodiments of the present disclosure, the two connecting arms 122 are disposed at an end of the connecting bracket 12 away from the frame. The planes of the two connecting arms 122 are substantially perpendicular to the plane of the second extension portion 114. The planes of the two limiting portions 121 are substantially parallel to the plane of the second extension portion 114. An accommodating space for accommodating the second extension portion 114 may be formed between the two connecting arms 122 and the two limiting portions 121.

Fig. 8 shows a schematic structural view of a connecting mechanism 1 with an elastic piece according to some embodiments of the present disclosure. Fig. 9 shows a schematic structural view of an elastic piece of a connecting mechanism according to some embodiments of the present disclosure. As shown in Figs. 8 and 9, the elastic component 13 may include a bent elastic piece. A bent portion of the elastic piece is sleeved on the connecting post 1131. Exemplarily, the bent elastic piece may be generally U-shaped, with a convex arc piece and two straight pieces located on both sides of the convex arc piece. The connecting post 1131 may be located in a recessed groove of the convex arc piece. The two straight pieces respectively abut against a limiting portion 121 and the second extension portion 114.

Fig. 7 shows a schematic structural view of a connecting mechanism 1 with a torsion spring according to some embodiments of the present disclosure. As shown in Figs. 1 and 7, the elastic component 13 may include a torsion spring. The torsion spring is sleeved on the connecting post 1131. The torsion spring has a helical tubular segment and torsion arms located at both ends of the helical tubular segment. The helical tubular segment is sleeved on the connecting post 1131, and the two torsion arms are located within the accommodating space and respectively abut against the second extension portion 114 and a limiting portion 121.

In some optional embodiments, as shown in Figs. 10 to 12, the second extension portion 114 includes a wide segment 1141 and a narrow segment 1142. The wide segment 1141 is connected to the first extension portion 111, and the narrow segment 1142 is connected to an end of the wide segment 1141 away from the first extension portion 111. The width of the wide segment 1141 is less than the distance between the two connecting arms 122. The width of the narrow segment 1142 is less than that of the wide segment 1141. When the support 11 rotates about the first axial direction to a limit position, the narrow segment 1142 abuts against a limiting portion 121. The second extension portion 114 has a greater width on a side close to the first extension portion 111 and a smaller width at an end away from the first extension portion 111, such that the overall structural strength is high and large deformation is not liable to occur. A free end of the second extension portion 114 has the greatest range of motion. By providing the narrow segment 1142 on the side of the free end of the second extension portion 114, limiting engagement with the limiting portion 121 is facilitated, and frictional interference with other structures on the connecting bracket 12, such as the connecting arms 122, is less likely to occur, thereby improving reliability. The connecting bracket 12 may be made of a wear-resistant material. For example, the connecting bracket 12 may be made of stainless steel.

In some optional embodiments, as shown in Figs. 10 to 12, any one of the limiting portions 121 of the connecting bracket 12 is formed by a limiting member 121a. The limiting member 121a is detachably connected to the above-described connecting bracket 12.

During assembly of the support 11 and the connecting bracket 12, the second extension portion 114 may first be placed in the accommodating space, and the limiting member 121a may then be connected to the connecting bracket 12, such that the free end of the second extension portion 114 is limited within the accommodating space. Optionally, the connecting bracket 12 may be provided with a connecting hole, the limiting member 121a may be provided with a through hole, and the limiting member 121a may be fixedly connected to the connecting hole in the connecting bracket 12 by means of a fastener. Optionally, a plurality of connecting holes may be provided, and the plurality of connecting holes extend in an arrangement direction of the two connecting arms 122. By designing the limiting member 121a to be detachable, the assembly of the support 11 and the connecting bracket 12 can be facilitated. When the limiting member 121a becomes deformed or damaged during long-term use, the limiting member 121a can be conveniently detached and replaced, thereby extending the service life of the entire connecting mechanism 1.

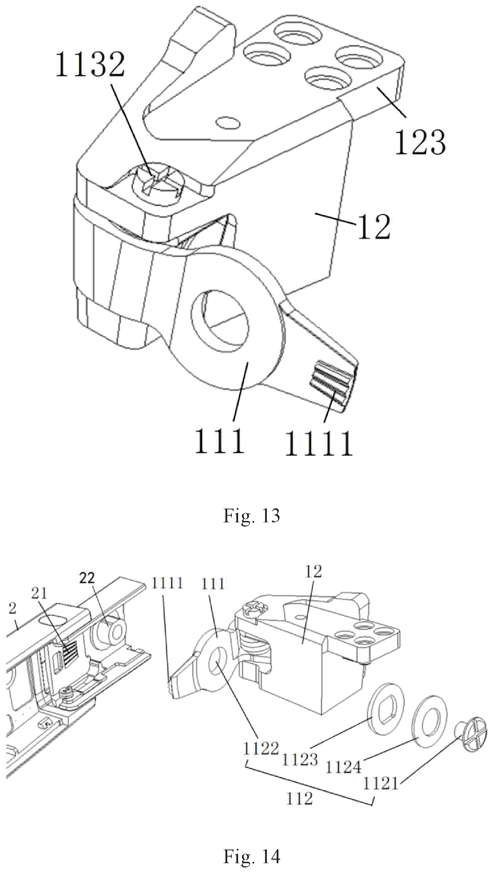

In some optional embodiments, as shown in Figs. 6 and 14, the connecting mechanism 1 further includes a second rotational connecting portion 112 disposed on the first extension portion 111. The second rotational connecting portion 112 is configured to connect the temple to the first extension portion 111, allowing the temple to rotate about a second axial direction via the second rotational connecting portion 112, to enable the temple to rotate about the second axial direction relative to the frame. An included angle is formed between the second axial direction and the first axial direction.

In some possible implementations, with reference to Fig. 6, an assembling portion 320 is provided at an end of the crossbeam 32 in the length direction thereof. The assembling portion 320 is connected to the connecting bracket 12, and is connected to the front frame 31.

The assembling portion 320 is a tail end of the crossbeam 32 and serves dual functions: connection and fixation to the temple 2, and connection and assembly with the front frame 31. A deformation gap is formed between the assembling portion 320 and the front frame 31, and deformable elements 352 may be disposed within the deformation gap. Optionally, two deformable elements 352 may be disposed between the assembling portion 320 at each end of the crossbeam 32 and the front frame 31. The deformable elements 352 are arranged sequentially in a height direction of the front frame. Each deformable element 352 has a central hole. Each rigid connector passes sequentially through the assembling portion 320 and a central hole of a corresponding deformable element 352 and is connected to the front frame.

Optionally, a through hole may be provided in the assembling portion 320. The through hole extends in the thickness direction of the frame 3. An inner surface of the front frame 31 is provided with a connecting post, which has a threaded groove. A rigid connector has a screw rod and a cap. The screw rod passes through the through hole in the assembling portion 320 and is threadedly connected into the threaded groove of the connecting post on the front frame 31, and the cap is limited by the assembling portion 320.

As shown in Figs. 1 to 4, the smart glasses 100 according to the embodiments of the present disclosure have an optical imaging system 5. The crossbeam is configured to support the optical imaging system 5. The crossbeam 32 has structural strength and can ensure the positional accuracy of the optical imaging system 5. A communication hole is formed in the crossbeam 32. The communication hole runs through the crossbeam 32 in a height direction of the frame 3. The optical imaging system 5 is located at the bottom of the crossbeam 32. One end of a fastener a passes through the communication hole in the crossbeam 32 and is connected to the optical imaging system 5. Optionally, the smart glasses 100 may be augmented reality glasses.

In some possible implementations, as shown in Figs. 6 and 11, the assembling portion 320 includes a first connecting plate 321. The first connecting plate 321 is provided with a notch portion 3211. The connecting bracket 12 includes a second connecting plate 123. The second connecting plate 123 is provided with a protruding portion 1232. The notch portion 3211 engages with the protruding portion 1232 to limit the first connecting plate and the second connecting plate 123. The first connecting plate 321 and the second connecting plate 123 may be fitted to each other in the thickness direction. The protruding portion 1232 may be inserted into the notch portion 3211. The notch portion 3211 and the protruding portion 1232 are in limiting engagement, such that the crossbeam 32 and the connecting bracket 12 are integrally connected.

The second connecting plate 123 is detachably connected to the first connecting plate 321. For example, the first connecting plate 321 and the second connecting plate 123 may be connected and fixed by means of fasteners. The first connecting plate 321 may be provided with a notch portion 3211 and a plurality of first fixing holes 3212. The first fixing holes 3212 are respectively disposed on two sides of the notch portion 3211. The second connecting plate 123 is provided with a plurality of second fixing holes 1231. The fasteners respectively pass through the second fixing holes 1231 and are connected to corresponding first fixing holes 3212.

In some possible implementations, the assembling portion 320 of the smart glasses 100 further includes stop plates 322. The stop plates 322 are formed on two sides of the first connecting plate 321 in a thickness direction of the front frame 31. A limiting groove is formed between the stop plates 322 and the first connecting plate 321. The second connecting plate 123 is limited in the limiting groove. The stop plates 322 are connected to the front frame 31.

Optionally, a thickness end face of the second connecting plate 123 is fitted to an inner wall of the limiting groove. The limiting groove limits the position of the second connecting plate 123, preventing displacement of the second connecting plate 123 relative to the assembling portion 320. In addition to the function of limiting the connecting plates, the stop plates 322 also serve to connect to the front frame 31.

In some possible embodiments, a deformation gap is formed between the stop plates 322 and the front frame 31. A deformable element 352 may be disposed within the deformation gap. The stop plates 322 are provided with through holes in the thickness direction. The deformable element 352 may be provided between the stop plates 322 and the frame 3. One end of a side connecting member 351 passes through the through holes and is connected to the front frame 31.

With reference to Figs. 1 and 4, two deformable elements 352 may be disposed between each assembling portion 320 and the front frame 31. The deformable elements 352 are arranged sequentially in a height direction of the front frame. The deformable elements 352 each have a central hole. Rigid connectors pass sequentially through the stop plates 322 and the central holes of the deformable elements 352 and are connected to the front frame.

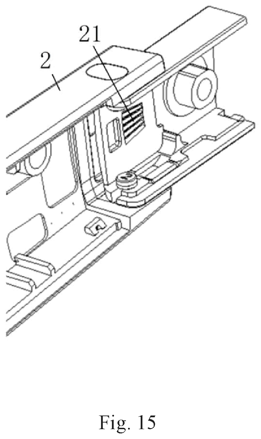

Fig. 14 shows a structural exploded view of connection between a temple and a connecting mechanism of glasses according to embodiments of the present disclosure. Fig. 15 shows a partial structural view of a temple of glasses according to embodiments of the present disclosure. As shown in Figs. 14 and 15, and in conjunction with Fig. 2, the temple 2 of the glasses 100 may also swing up and down relative to the frame 3 about a second axial direction. A free end of the temple 2 can swing up and down relative to the frame 3, so as to adapt to wearers having different relative heights between the ears and the eyes, enabling the eyes of the wearer to be located within a designed eye box range, thereby enabling the wearers to view a complete and clear display image.

In some optional embodiments, the temple 2 of the glasses 100 can both splay outward about the first axial direction relative to the frame 3 and swing up and down about the second axial direction relative to the frame. Optionally, the second axial direction is substantially perpendicular to the first axial direction.

In some optional embodiments, as shown in Figs. 5, 6, 14 and 15, the connecting mechanism 1 further includes a second rotational connecting portion 112 disposed on the first extension portion 111. The second rotational connecting portion 112 is configured to rotatably connect the temple 2 to the first extension portion 111, allowing the temple to rotate about a second axial direction via the second rotational connecting portion 112, to enable the temple to rotate about the second axial direction relative to the frame.

With reference to Fig. 1, the first extension portion 111 is rotatably connected to the temple 2 via the second rotational connecting portion 112, so that the temple 2 can swing up and down relative to the frame 3. As shown in Figs. 14 and 15, the temple 2 is provided with a first toothed portion 21. Protruding teeth of the first toothed portion 21 are arranged sequentially in the width direction of the temple 2. The first extension portion 111 is provided with a second toothed portion 1111 mated with the first toothed portion 21. When the temple 2 rotates relative to the first extension portion 111, the first toothed portion 21 can be caused to move relative to the second toothed portion 1111, thereby changing a position of engagement with the second toothed portion 1111.

In the embodiments of the present disclosure, movements of the temples 2 in two different directions can be implemented, i.e., the two temples 2 of the glasses 100 can be splayed outward (flared outward) to adapt to head circumferences of different wearers and improve the adaptability. Moreover, the two temples 2 of the glasses 100 may also swing up and down to implement up-down adjustment so as to adapt to relative heights between the ears and the eyes of different wearers, enabling the eyes of the different wearers to be located within the designed eye box range. The first toothed portion 21 and the second toothed portion 1111 each include a plurality of protruding teeth. By adjusting the temple 2 up or down, the first toothed portion 21 and the second toothed portion 1111 can be engaged at different positions, thereby adjusting up-down swinging positions of the temple 2. The second rotational connecting portion 112 may include a fastener 1121, a disc spring 1124, a friction plate 1123, and a second connecting hole 1122 provided in the first extension portion 111. One end of the fastener 1121 may sequentially pass through the disc spring 1124, the friction plate 1123, and the second connecting hole 1122 in the first extension portion 111, and be then connected to a rotating post 22 on the temple 2. The disc spring 1124 and the friction plate 1123 are configured to provide damping for the up-down swinging of the temple 2.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1. Smart glasses, comprising:
a frame comprising a front frame and a crossbeam, the front frame being connected to the crossbeam with a deformation gap therebetween; and
a temple rotatably connected to the crossbeam, causing the crossbeam to deform and move closer to the front frame.

2. The smart glasses according to claim 1, wherein the smart glasses further comprise a sensor arranged on the front frame, at least part of the sensor being located within the deformation gap.

3. The smart glasses according to claim 1 or 2, wherein a middle portion of the front frame is fixedly connected to the crossbeam; and the sensor is arranged at an end of the front frame.

4. The smart glasses according to any one of claims 1 to 3, wherein the frame comprises a deformable element; and
the deformable element is located within the deformation gap, and the deformable element is in limiting engagement with at least one of the front frame and the crossbeam.

5. The smart glasses according to claim 4, wherein the frame comprises a side connecting member disposed at an end of the crossbeam in a length direction thereof, the side connecting member connecting the crossbeam to the front frame, and the deformable element being disposed on the side connecting member.

6. The smart glasses according to any one of claims 1 to 5, wherein the frame comprises a middle connecting member disposed at a middle portion of the crossbeam in the length direction thereof, the middle connecting member connecting the crossbeam to the front frame, and the middle connecting member being formed of any one of:
a deformable material;
a rigid material; and
a combination of a rigid material and a deformable material.

7. The smart glasses according to any one of claims 1 to 6, wherein the smart glasses further comprise a connecting mechanism, the connecting mechanism comprising:
a support connected to a temple; and
a connecting bracket connected to an end of the crossbeam in a length direction of the crossbeam,
wherein the support is rotationally connected to the connecting bracket, to enable the temple to rotate about a first axial direction relative to the frame.

8. The smart glasses according to claim 7, wherein a sensor is at a position opposite to the connecting bracket in a thickness direction of the frame, and a deformation gap is defined between the sensor and the connecting bracket.

9. The smart glasses according to claim 7 or 8, wherein the support comprises a first extension portion and a second extension portion, the first extension portion and the second extension portion being connected to each other, with an included angle between the first extension portion and the second extension portion;
the connecting bracket comprises oppositely arranged limiting portions; and
the support is rotatably connected to the connecting bracket, the second extension portion is located between the limiting portions, and the second extension portion is rotatable about the first axial direction.

10. The smart glasses according to claim 9, wherein an extension direction of the first extension portion is substantially parallel to a length direction of the temple; and
the second extension portion is substantially parallel to a length direction of the crossbeam when abutting against one of the limiting portions.

11. The smart glasses according to claim 10, wherein when the second extension portion abuts against one of the limiting portions, the crossbeam is caused to deform.

12. The smart glasses according to any one of claims 9 to 11, wherein the connecting mechanism further comprises:
an elastic component located between the support and the connecting bracket to provide a restoring force for the first extension portion to rotate toward the connecting bracket.

13. The smart glasses according to any one of claims 7 to 12, wherein an assembling portion is provided at an end of the crossbeam in the length direction thereof, the assembling portion being connected to the connecting bracket and to the front frame.

14. The smart glasses according to claim 13, wherein the assembling portion comprises:
a first connecting plate provided with a notch portion;
the connecting bracket comprises a second connecting plate provided with a protruding portion, the notch portion engaging with the protruding portion to limit a connecting plate and the second connecting plate; and
the second connecting plate is connected to the first connecting plate by means of a fastener.

15. The smart glasses according to claim 14, wherein the assembling portion further comprises:
stop plates formed on two sides of the first connecting plate in a thickness direction of the front frame, wherein a limiting groove is defined between the stop plates and the first connecting plate; the second connecting plate is limited in the limiting groove; and
the stop plates are connected to the front frame.
